(19) Europäisches Patentamt
European Patent Office
Office européen des brevets

(11) **EP 4 462 748 A1**

(12) **DEMANDE DE BREVET EUROPEEN**

(43) Date de publication:
**13.11.2024   Bulletin 2024/46**

(21) Numéro de dépôt: **24173494.6**

(22) Date de dépôt: **30.04.2024**

(51) Classification Internationale des Brevets (IPC):
*H04L 45/02* (2022.01)     *H04L 12/46* (2006.01)
*H04L 45/12* (2022.01)     *H04L 45/00* (2022.01)
*H04L 45/80* (2022.01)     *H04L 47/125* (2022.01)

(52) Classification Coopérative des Brevets (CPC):
**H04L 47/125; H04L 45/04; H04L 45/12;
H04L 45/22; H04L 45/70; H04L 45/80;**
H04L 12/4608

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité:  **12.05.2023   FR 2304720**

(71) Demandeur: **Orange
92130 Issy-les-Moulineaux (FR)**

(72) Inventeurs:
• **CARLINET, Yannick
92326 CHATILLON CEDEX (FR)**
• **GOURDIN, Eric
92326 CHATILLON CEDEX (FR)**
• **PERROT, Nancy
92326 CHATILLON CEDEX (FR)**

(74) Mandataire: **Cabinet Beau de Loménie
158, rue de l'Université
75340 Paris Cedex 07 (FR)**

(54) **PROCÉDÉ ET SYSTÈME DE CONFIGURATION D'UN SYSTÈME AUTONOME**

(57)   Ce procédé de configuration d'un premier système autonome (AS2) dans un réseau de transit, ce procédé comportant :

- une étape (E20) d'obtention d'une information selon laquelle le trafic reçu par un routeur d'entrée (REj) dudit premier système autonome (AS2) est saturé ;

- une étape (E40) de détermination d'un préfixe (i) d'un sous-réseau de destination (SRDi) d'un deuxième système autonome (AS3) en aval dudit premier système autonome (AS2);

- une étape (E50) d'allongement du chemin associé audit préfixe (i) sur au moins un routeur cible (REk) dudit premier système autonome (AS2) ;

ledit préfixe et ledit au moins un routeur cible REk étant déterminés en optimisant une fonction objectif (FOBJ) de sorte que le chemin associé audit préfixe doit être allongé pour tous les routeurs d'entrée du premier système autonome (AS2) qui sont géographiquement plus proches du routeur saturé (REj) que ledit routeur cible (REk).

[Fig. 2]

EP 4 462 748 A1

**Description**

Technique antérieure

L'invention se situe dans le contexte d'un réseau de transit. Elle concerne plus particulièrement un procédé et un système permettant de rééquilibrer la charge dans un système autonome (en anglais, Autonomous Systems AS) lorsqu'il est détecté que l'une de ses interfaces d'entrée est saturée.

De manière équivalente, les expressions « interface d'entrée » ou « routeur d'entrée » seront utilisées.

De façon connue, un tel routeur d'entrée reçoit, d'un ou plusieurs routeurs de sortie d'un système autonome dit « amont », du trafic comportant des paquets, et route chacun de ces paquets, à partir de leur adresse IP de destination, vers un sous-réseau de destination d'un système autonome dit « aval ».

On rappelle que les adresses IP des équipements d'un même sous-réseau de destination appartiennent à une même plage d'adresses appelée « préfixe ».

On rappelle aussi que ces réseaux de transit utilisent le protocole BGP (en anglais, Border Gateway Protocol) pour échanger des informations de routage et d'accessibilité de réseaux (appelés préfixes) entre les systèmes autonomes.

Le protocole BGP définit notamment un mode de fonctionnement eBGP (en anglais, Exterior BGP) utilisé entre deux systèmes autonomes AS. Ce protocole définit des messages, chacun associé à un certain nombre d'attributs.

Par exemple, une fois la connexion eBGP établie entre le routeur d'entrée d'un premier système autonome et un routeur de sortie d'un deuxième système autonome amont, le routeur d'entrée communique au routeur de sortie :

- des informations sur les réseaux de destination qu'il connait et pour lesquels il propose du transit, ainsi
- qu'un certain nombre d'attributs associés à ces réseaux, qui permettent d'éviter des boucles. C'est aux routeurs de sortie du deuxième système autonome amont de choisir un routeur d'entrée du premier système autonome qui offre la meilleure route vers un sous-réseau de destination.

En particulier, quand plusieurs routes sont possibles vers un même sous-réseau de destination, le protocole BGP permet à un routeur de déterminer la meilleure route à utiliser et de l'annoncer à ses routeurs voisins.

A cet effet, le protocole définit un attribut « AS Path » qui comporte une liste ordonnée des systèmes autonomes traversés pour atteindre un sous-réseau de destination. Toutes choses étant égales par ailleurs, le protocole BGP choisit la route avec l'attribut « AS Path » le plus court.

Il est fréquent que certaines interfaces d'entrée soient saturées mais pas d'autres.

Dans l'état actuel de la technique, une solution pour essayer de sortir de cette situation de saturation consiste à reconfigurer le routeur d'entrée saturé en augmentant la liste de l'attribut « AS Path » associée à un sous-réseau de destination, autrement dit à un préfixe. Les routeurs de sortie du deuxième système autonome amont déplacent alors le trafic destiné à ce préfixe vers un autre routeur d'entrée.

Mais le grand nombre de préfixes ainsi que la combinatoire liée à la nature du problème font qu'il est très difficile de choisir les préfixes dont les chemins doivent être allongés. En effet, un préfixe choisi peut entrainer une saturation sur un routeur d'entrée ; il faut alors choisir des nouveaux préfixes sur ce dernier routeur d'entrée, ce qui peut entrainer de nouvelles saturations ailleurs, et ainsi de suite.

L'invention vise un procédé et un système de configuration qui ne présente pas ces inconvénients.

Objet et résumé de l'invention

Ainsi, et selon un premier aspect, l'invention concerne un procédé de configuration d'un premier système autonome dans un réseau de transit, ce procédé comportant :

- une étape d'obtention d'une information selon laquelle le trafic reçu par un routeur d'entrée du premier système autonome est saturé, ledit trafic étant reçu en provenance d'au moins un routeur de sortie d'un deuxième système autonome en amont dudit premier système autonome ;
- une étape de détermination d'un préfixe d'un sous-réseau de destination d'un troisième système autonome en aval dudit premier système autonome, au moins une partie dudit trafic étant destiné à des équipements dudit sous-réseau de destination;
- une étape d'allongement du chemin associé audit préfixe sur au moins un routeur cible parmi les routeurs d'entrée dudit premier système autonome ;

ledit préfixe et ledit au moins un routeur cible étant déterminés en optimisant une fonction objectif dans le respect d'au moins ces contraintes, selon lesquelles :

(i) pour tout routeur d'entrée du premier système autonome, le trafic en entrée dudit routeur est inférieur à un seuil de saturation ; et

(ii) le chemin associé audit préfixe doit être allongé pour tous les routeurs d'entrée du premier système autonome qui sont géographiquement plus proches du routeur saturé que ledit routeur cible.

Corrélativement, l'invention concerne un système de configuration d'un premier système autonome dans un réseau de transit, ce système comportant :

- une unité d'optimisation configurée pour obtenir une information selon laquelle le trafic reçu par un routeur d'entrée d'un premier système autonome est saturé, ledit trafic étant reçu en provenance d'au moins un routeur de sortie d'un deuxième système autonome en amont dudit premier système autonome;
- ladite unité d'optimisation étant configurée pour déterminer un préfixe d'un sous-réseau de destination d'un troisième système autonome en aval dudit premier système autonome, au moins une partie dudit trafic étant destiné à des équipements dudit sous-réseau de destination ;
- une unité de contrôle configurée pour allonger le chemin associé audit préfixe sur au moins un routeur cible parmi les routeurs d'entrée dudit premier système autonome ;

ledit préfixe et ledit au moins un routeur cible étant déterminés par ladite unité d'optimisation en optimisant une fonction objectif dans le respect d'au moins ces contraintes, selon lesquelles :

(i) pour tout routeur d'entrée du premier système autonome, le trafic en entrée dudit routeur est inférieur à un seuil de saturation ; et

(ii) le chemin associé audit préfixe doit être allongé pour tous les routeurs d'entrée du premier système autonome qui sont géographiquement plus proches du routeur saturé que ledit routeur cible.

Conformément à la deuxième contrainte, le chemin associé au préfixe déterminé est au moins allongé sur le routeur saturé et éventuellement sur au moins un autre routeur cible. L'invention fait l'hypothèse que l'allongement d'un chemin associé à un préfixe sur un routeur donné a pour effet que les routeurs de sortie du deuxième système autonome amont déplacent le trafic associé à ce préfixe vers l'interface la plus proche géographiquement de ce routeur donné, ce déplacement ayant pour effet un rééquilibrage de charge au sein du premier système autonome.

Conformément à l'invention, le préfixe est déterminé en optimisant une fonction objectif sous le respect de contraintes, une contrainte imposant que le chemin associé au préfixe doit être allongé pour tous les routeurs d'entrée du premier système autonome qui sont géographiquement plus proches du routeur saturé que le routeur cible.

Dans un mode particulier de réalisation, l'allongement du chemin associé au préfixe sur au moins un dit routeur cible comporte :

- une reconfiguration d'une table de routage du routeur cible en ajoutant au moins un système autonome à un attribut AS-Path du protocole BGP ; et
- un envoi dudit attribut à au moins un routeur de sortie dudit deuxième système autonome amont.

Dans un mode de réalisation de l'invention, l'optimisation de la fonction objectif consiste à minimiser le nombre de routeurs d'entrée à reconfigurer.

Dans d'autres modes de réalisation de l'invention, l'optimisation de la fonction objectif peut par exemple consister à minimiser le nombre de préfixes dont on rallonge le chemin, ou à minimiser la charge de l'interface la plus chargée.

La fonction objectif peut également être une combinaison linéaire d'une ou plusieurs de ces fonctions d'optimisation (minimisation du nombre de routeurs, de nombre de préfixes dont on rallonge le chemin, de la charge de l'interface la plus chargée, ...).

Dans un mode de réalisation:

- la fonction objectif est une fonction linéaire de la forme : Min $\sum_{j \in J} z_j$

- et les contraintes s'expriment de façon linéaire sous la forme :

| CST1 : | $\sum_{k \in J} x_{ijk} = 1$ | $\forall i \in I, \forall j \in J$ |
|---|---|---|
| CST2 : | $x_{ijk} + y_{ik} \leq 1$ | $\forall i \in I, \forall j \in J, \forall k \in J$ |
| CST3 : | $x_{ijk} \leq y_{il}$ | $\forall i \in I, \forall j \in J, \forall k \in J, \forall l \in L(j, k)$ |
| CST4 : | $\sum_{i \in I} \sum_{j \in J} p_{ijt} x_{ijk} \leq c^{max} b_k$ | $\forall k \in J, \forall t \in T$ |
| CST5 : | $y_{ij} \leq z_j$ | $\forall i \in I, \forall j \in J$ |

dans lesquelles :

- $c^{max}$ est un seuil de saturation et $b_j$ est le débit maximal supporté par le routeur REj ;
- $p_{ijt}$ est un pic de trafic associé au préfixe i sur l'interface j au cours d'une plage de temps t ;
- Lj est une liste ordonnée des routeurs d'entrée du premier système autonome du plus proche au plus éloigné du routeur saturé REj ;
- L(j,k) est une sous-liste de Lj comprenant les routeurs d'entrée du premier système autonome (AS2) qui sont géographiquement plus proches du routeur saturé (REj) que ledit routeur cible (REk) ;
- $x_{ijk}$ est une variable de décision binaire égale à 1 si le trafic associé au préfixe i est routé d'un routeur REi vers un routeur REj, 0 sinon ;
- $y_{ij}$ est une variable de décision binaire égale à 1 si le chemin associé au préfixe i est rallongé sur un routeur d'entrée REj, 0 sinon ;
- $z_j$ : variable de décision binaire égale à 1 si le routeur d'entrée REi est reconfiguré, 0 sinon.

Dans ce mode de réalisation, le procédé met en oeuvre un programme linéaire en nombre entier (PLNE), particulièrement adapté pour les problèmes d'optimisation avec une combinatoire élevée, le PLNE étant résolu afin d'obtenir une solution qui offre une garantie d'optimalité sur le nombre de routeurs à reconfigurer.
L'invention vise aussi un programme d'ordinateur comportant des instructions pour exécuter les étapes suivantes lorsque ledit programme est exécuté par un ordinateur.

- obtention d'une information selon laquelle le trafic reçu par un routeur d'entrée d'un premier système autonome est saturé, ledit trafic étant reçu en provenance d'au moins un routeur de sortie d'un deuxième système autonome en amont dudit premier système autonome ;
- détermination d'un préfixe d'un sous-réseau de destination d'un troisième système autonome en aval dudit premier système autonome, au moins une partie dudit trafic étant destiné à des équipements dudit sous-réseau de destination ;
- envoi d'une instruction pour allonger le chemin associé audit préfixe sur au moins un routeur cible parmi les routeurs d'entrée dudit premier système autonome ;

ledit préfixe et ledit au moins un routeur cible étant déterminés en optimisant une fonction objectif dans le respect d'au moins ces contraintes, selon lesquelles :

(i) pour tout routeur d'entrée du premier système autonome, le trafic en entrée dudit routeur est inférieur à un seuil de saturation ; et
(ii) le chemin associé audit préfixe doit être allongé pour tous les routeurs d'entrée du premier système autonome qui sont géographiquement plus proches du routeur saturé que ledit routeur cible.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.
L'invention vise aussi un support d'informations lisible par un ordinateur, et comportant des instructions d'un programme d'ordinateur tel que mentionné ci-dessus. Le support d'informations peut être n'importe quelle entité ou dispositif capable de stocker le programme. Par exemple, le support peut comporter un moyen de stockage, tel qu'une ROM, une mémoire non volatile de type flash ou encore un moyen d'enregistrement magnétique, par exemple un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Brève description des dessins :

D'autres caractéristiques et avantages de la présente invention ressortiront de la description faite ci-dessous, en référence aux dessins annexés qui en illustrent des exemples de réalisation dépourvus de tout caractère limitatif. Sur les figures :

[Fig. 1] La figure 1 illustre un exemple de mise en oeuvre d'un système d'équilibrage de charge conforme à un mode particulier de réalisation de l'invention. ;

[Fig. 2] La figure 2 représente les principales étapes d'un procédé de configuration conforme à un mode de réalisation de l'invention.

Description des modes de réalisation

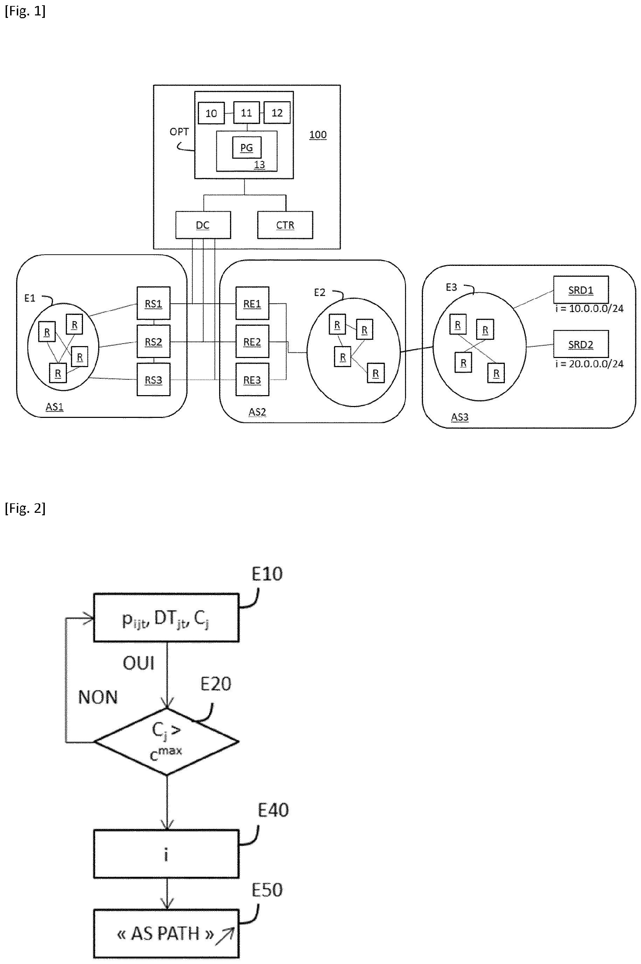

La figure 1 illustre de façon détaillée un exemple de mise en oeuvre d'un système d'équilibrage de charge 100 conforme à l'invention.

Dans le mode de réalisation décrit ici, le système d'équilibrage de charge 100 comporte une unité de collecte DC, une unité d'optimisation OPT et un contrôleur CTR.

Dans le mode de réalisation de la figure 1, ces trois entités sont séparées. En variante, au moins deux d'entre elles peuvent être intégrées dans un même équipement. Elles peuvent être colocalisées ou reliées entre elles par un réseau de nature quelconque.

Dans l'exemple décrit ici, un premier système autonome AS1 comporte trois routeurs de sortie RS1, RS2, RS3, et un deuxième système autonome AS2, en amont du premier système autonome AS1, comporte trois routeurs d'entrée RE1, RE2, RE3.

Dans l'exemple décrit ici, chaque routeur de sortie RSi est connecté avec le routeur d'entrée REi (de même indice).

Par ailleurs, dans l'exemple de la figure 1, le routeur de sortie RS1 est connecté au sein du système autonome AS1 au routeur de sortie AS2, lui-même connecté au routeur de sortie RS3. Le routeur de sortie RS1 a donc deux possibilités pour envoyer un paquet au sous réseau de destination SRD1 :

- soit router ce paquet vers le routeur d'entrée RE1,
- soir le router vers le routeur de sortie RS2, qui peut à son tour soit le router vers le routeur d'entrée RE2, soit vers le routeur de sortie RS3, ce dernier le routant alors vers le routeur d'entrée RE3.

Dans l'exemple de réalisation décrit ici, on suppose que les trois routeurs d'entrée RE1, RE2, RE3 du système autonome AS2 sont localisés respectivement à Paris, à Londres et à Amsterdam.

Dans l'exemple décrit ici, le système autonome AS3 comporte deux sous-réseaux de destination SRD1, SRD2 et d'autres sous-réseaux de destination non représentés.

Chacun de ces systèmes autonomes ASi comporte en outre un ensemble Ei de routeurs R.

Les adresses des équipements d'un même sous-réseau de destination ont le même préfixe.

Par exemple :

- le sous-réseau de destination SRD1 contient la plage d'adresses IP 10.0.0.0 à 10.0.0.255, et son préfixe peut être noté 10.0.0.0/24 ; et
- le sous-réseau de destination SRD2 contient la plage d'adresses IP 20.0.0.0 à 20.0.0.255, et son préfixe peut être noté 20.0.0.0/24.

Conformément au protocole BGP, chaque routeur d'entrée du premier système autonome AS2 gère une table de routage, qui comprend, pour chaque sous-réseau de destination vers lequel il peut router du trafic, un attribut AS-Path qui liste le ou les systèmes autonomes qu'un paquet doit traverser pour atteindre ce sous-réseau. Par exemple, la table de routage du routeur d'entrée RE1 comporte deux enregistrements :

SRD1 : AS-Path : AS2, AS3
SRD2 : AS-Path : AS2, AS3

Conformément au protocole BGP, le routeur d'entrée RE1 (respectivement RE2, RE3) annonce au routeur de sortie RS1 (respectivement RS2, et RS3) du système autonome AS1 qu'il est capable de router le trafic vers les sous-réseaux de destination SRD1 et SRD2, ce message comportant ces informations de sa table de routage, et notamment à quelle distance ils se trouvent de chacun de ces sous-réseaux. Cette distance est propre au fonctionnement du routage IP et ne correspond pas à une distance géographique. Pour la distinguer d'une distance géographique, on nommera cette distance « distance de routage ».

A titre d'exemple le routeur d'entrée RE1 envoie au routeur de sortie RS1 deux messages de type UPDATE(SRD1, AS2, AS3) et UPDATE(SRD2, AS2, AS3) pour lui indiquer qu'il peut router du trafic vers le sous-réseau de destination SRD1 (respectivement SRD2) et qu'il se trouve à une distance de routage de deux systèmes autonomes (en l'espèce AS2, AS3) du sous-réseau de destination SRD1 (respectivement SRD2).

Dans l'exemple de réalisation décrit ici, le routeur d'entrée RE2 (respectivement RE3) fait les mêmes annonces au routeur de sortie RS2 (respectivement RS3).

La figure 2 représente les principales étapes d'un procédé de configuration conforme à un mode de réalisation de l'invention.

Le procédé d'équilibrage comporte une étape générale E10 de collecte de données représentatives du trafic reçu en entrée par les routeurs d'entrée RE1, RE2, RE3 du système autonome AS2.

Si la collecte des données ne peut se faire simultanément sur l'ensemble des préfixes, il peut se faire par tranches de temps par groupes de préfixes.

Dans le mode de réalisation décrit ici, ces données permettent notamment de déterminer :

- le pic de débit, autrement dit le débit maximal, en entrée d'un routeur d'entrée au cours d'une plage de temps ; et
- le pic de débit correspondant aux paquets d'un sous-réseau de destination SRDi, autrement dit au trafic associé à un préfixe donné au cours d'une plage de temps.

Dans l'exemple de réalisation décrit ici, nous considérerons deux plages de temps, à savoir par exemple le matin et le soir.

Les notations utilisées ci-après sont introduites sur un exemple.

Dans l'exemple de réalisation décrit ici, on considère 2 sous-réseaux de destination SRD1, SRD2, notés SRDi, à savoir 2 préfixes i = 1 à 2.

Dans l'exemple de réalisation décrit ici, le système comporte 3 routeurs d'entrée RE1, RE2, RE3, autrement dit 3 interfaces j = 1 à 3.

Dans l'exemple de réalisation décrit ici, on considère deux plages de temps t = 1 à 2.

On note $p_{ijt}$ le pic de trafic associé au préfixe i sur l'interface j au cours de la plage de temps t.

On suppose pour illustrer la description, que la situation nominale est celle du tableau T1 en annexe.

Par exemple, pour le routeur RE1, interface j=1, situé à Paris :

- le débit maximal le matin (t=1) à destination du sous réseau SDR1 (préfixe i=1), noté $p_{111}$, est de 3 Gbps ;
- le débit maximal le matin (t=1) à destination de SDR2 (i=2), noté $p_{211}$, est de 2 Gbps ;
- le débit maximal le soir (t=2) à destination de SDR1 (i=1), noté $p_{112}$, est de 6 Gbps ;
- le débit maximal le soir (t=2) à destination de SDR2 (i=2), noté $p_{212}$, est de 4 Gbps.

On note $DT_{jt}$, le débit maximal cumulé sur l'interface j au cours de la plage de temps t.

On note Cj, la charge sur l'interface j, définie comme le rapport entre le débit maximal sur une ou plusieurs plages de temps et le débit maximal $b_j$ supporté par cette interface (supposé égal à 100 Gbps pour toutes les interfaces ci-après).

Dans l'exemple du tableau T1, on considère que le débit maximal le matin (t=1) en entrée de l'interface 1 (routeur RE1), noté $DT_{11}$ est de 80 Gbps ; et que le soir, ce débit maximal est $DT_{12}$ = 93 Gbps. La charge $C_1$ du routeur RE1 est donc de 93%.

Le procédé de configuration comporte une étape E20 pour déterminer si le trafic en entrée d'un routeur d'entrée REj du système autonome AS2 est saturé. Dans le mode de réalisation décrit ici, cette détermination est effectuée en comparant la charge du routeur REj avec un seuil de saturation $c^{max}$.

Dans l'exemple décrit ici, le seuil de saturation $c^{max}$ est égal à 90%.

Dans l'exemple du tableau T1, le routeur d'entrée RE1 (ou l'interface 1) est déterminé comme étant saturé, car $C_1$ (93%) est supérieur à $c^{max}$.

Lorsqu'un routeur d'entrée REj est déterminé comme étant saturé, le résultat du test E20 est positif.

L'invention propose de rééquilibrer la charge en allongeant le chemin associé à un préfixe sur ce routeur saturé, l'invention faisant l'hypothèse que lorsqu'un routeur de sortie du système autonome AS1 apprend que le chemin associé à un préfixe est allongé sur un routeur d'entrée REj, il déplace le trafic associé à ce préfixe sur le routeur d'entrée REk du système autonome AS2 le plus proche géographiquement de REj.

Le tableau TD en annexe présente les distances géographiques entre Paris (PAR), Londres (LON) et Amsterdam (AMS).

Pour un routeur d'entrée REj, autrement dit pour une interface j, on note Lj la liste ordonnée des routeurs d'entrée REk (interfaces k), de la plus proche à la plus éloignée à partir de l'interface j.

Dans cet exemple :

$$L1 = \{1, 2, 3\}, L2 = \{2, 1, 3\}, L3 = \{3, 2, 1\}.$$

Dans un mode de réalisation de l'invention, pour allonger le chemin associé à un préfixe i sur un routeur d'entrée REk (interface k), on reconfigure ce routeur REk en ajoutant à l'attribut AS PATH du protocole BGP un système autonome dans la liste des systèmes autonomes à parcourir pour atteindre le sous-réseau de destination SRDi associé à ce préfixe.

Par exemple, dans l'exemple décrit ici, pour allonger le chemin associé au préfixe i=1 sur le routeur d'entrée RE1, l'enregistrement de la table de routage du routeur d'entrée RE1 associé à ce préfixe peut être modifié :

SRD1 : AS-Path : AS2, AS2, AS3

Cette configuration peut être effectuée par le contrôleur CTR.

Conformément au protocole BGP, le routeur d'entrée REi dont la table de routage a été modifiée annonce cette reconfiguration au routeur de sortie amont auquel il est connecté.

Dans cet exemple, le routeur d'entrée RE1 envoie au routeur de sortie RS1 deux messages de type UPDATE(SRD1, AS2, AS2, AS3).

Le routeur de sortie RS1 prend connaissance de ce changement d'attribut et choisit de router le trafic associé au sous-réseau de destination SRDi (par exemple ici SRD1) vers un autre routeur d'entrée du système autonome AS2 offrant une route BGP plus courte vers ce sous-réseau de destination.

En effet, dans le schéma de la figure 1, le routeur de sortie RS1 a deux possibilités pour envoyer un paquet au sous réseau de destination SRD1 :

- soit router ce paquet vers le routeur d'entrée RE1 qui a annoncé la route AS2, AS2, AS3 (distance de routage égale à 3 AS),
- soit router ce paquet vers le routeur de sortie RS2 qui le route vers le routeur d'entrée RE2 qui a annoncé la route AS2, AS2 (distance de routage égale à 2 AS)

Dans cet exemple, il choisira alors la deuxième option qui est la plus courte.

En reprenant l'exemple du tableau T1, nous détaillons ci-après l'effet de l'allongement du chemin associé au préfixe i=1, puis au préfixe i=2.

Allongement du chemin associé au préfixe i=1

Le tableau T2 en Annexe illustre ainsi les débits en entrée de chacun des routeurs d'entrée RE1, RE2, RE3 en supposant que le chemin associé au préfixe i=1 est allongé sur le routeur RE1.

Conformément à l'invention, on suppose que cet allongement de chemin a pour effet que le trafic associé au préfixe i=1 sera déplacé sur l'interface la plus proche géographiquement, soit RE2 (voir liste L1). Par conséquent, si c'est le cas :

- le débit $p_{111}$ associé au préfixe i=1 en entrée de l'interface j=1 pour la plage de temps t=1 devient 0, tout le trafic associé étant routé sur l'interface 2 ; le débit total $DT_{11}$ est diminué de 3 Gbps ;
- le débit $p_{121}$ associé au préfixe i=1 en entrée de l'interface j=2 qui était de 10 Gbps dans la plage t = 1 est augmenté de 3 Gbps et devient 13 Gbps ; le débit total $DT_{21}$ est également augmenté de 3 Gbps ;

- le débit $p_{112}$ associé au préfixe i=1 en entrée de l'interface j=1 pour la plage de temps t=2 devient 0, tout le trafic associé étant routé sur l'interface 2 ; le débit total $DT_{12}$ est diminué de 6 Gbps ; la charge $C_1$ sur l'interface 1 est alors de 87%, en dessous du seuil $c^{max}$ ;
- le débit $p_{122}$ associé au préfixe i=1 en entrée de l'interface j=2 qui était de 20 Gbps dans la plage t = 2 est augmenté de 6 Gbps et devient 26 Gbps ; le débit total $DT_{22}$ en entrée du routeur RE2 est également augmenté de 6 Gbps et devient 94 Gbps.

On constate que la charge $C_2$ du routeur d'entrée RE2 de 94% dépasse alors le seuil de saturation $C^{max}$.

On suppose maintenant que le chemin associé au préfixe i=1 est également rallongé sur le routeur d'entrée RE2 et que cet allongement de chemin a pour effet que le trafic associé au préfixe i=1 sera déplacé sur l'interface la plus proche géographiquement de RE2, c'est à dire vers RE3 (voir liste L1).

Le tableau T3 an Annexe illustre les débits en entrée de chacun des routeurs d'entrée RE1, RE2, RE3 en supposant que le débit associé au préfixe i=1 est rallongé sur les routeurs RE1 et RE2 et est donc routé sur le routeur d'entrée RE3. Notamment :

- le débit $p_{121}$ associé au préfixe i=1 en entrée de l'interface j=2 pour la plage de temps t=1 devient 0, tout le trafic associé étant routé sur l'interface 3 ; le débit total $DT_{11}$ est diminué de 13 Gbps ;
- le débit $p_{131}$ associé au préfixe i=1 en entrée de l'interface j=3 qui était de 2 Gbps dans la plage t = 1 est augmenté de 13 Gbps et devient 15 Gbps ; le débit total $DT_{31}$ est également augmenté de 13 Gbps ;
- le débit $p_{122}$ associé au préfixe i=1 en entrée de l'interface j=2 pour la plage de temps t=2 devient 0, tout le trafic associé étant routé sur l'interface 3 ; le débit total $DT_{22}$ est diminué de 26 Gbps ; la charge $C_1$ sur l'interface 2 est alors de 70%, en dessous du seuil $c^{max}$ ;

- le débit $p_{132}$ associé au préfixe i=1 en entrée de l'interface j=3 qui était de 2 Gbps dans la plage t = 3 est augmenté de 26 Gbps et devient 28 Gbps ; le débit total $DT_{32}$ en entrée du routeur RE2 est également augmenté de 26 Gbps et devient 96 Gbps.

On constate que la charge $C_3$ du routeur d'entrée RE3 de 94% dépasse le seuil de saturation $c^{max}$ de 90%.

Dans cet exemple, il n'est pas possible de router le trafic en entrée sur un autre routeur d'entrée du système autonome AS2.

Par conséquent, le rallongement des chemins associés au préfixe i=1 sur les routeurs d'entrée RE1, RE2 ne permet pas d'éviter le phénomène de saturation adressé par l'invention.

Allongement du le chemin associé au préfixe i=2

Le tableau T4 en Annexe illustre ainsi les débits en entrée de chacun des routeurs d'entrée RE1, RE2, RE3 en supposant que le chemin associé au préfixe i=2 est allongé sur le routeur RE1, et que ce trafic est routé vers le routeur d'entrée RE2. Notamment :

- le débit $p_{211}$ associé au préfixe i=2 en entrée de l'interface j=1 pour la plage de temps t=1 devient 0, tout le trafic associé étant routé sur l'interface 2 ; le débit total $DT_{11}$ est diminué de 3 Gbps ;
- le débit $p_{221}$ associé au préfixe i=2 en entrée de l'interface j=2 qui était de 3 Gbps dans la plage t = 1 est augmenté de 2 Gbps et devient 5 Gbps ; le débit total $DT_{21}$ est également augmenté de 2 Gbps ;
- le débit $p_{212}$ associé au préfixe i=2 en entrée de l'interface j=1 pour la plage de temps t=2 devient 0, tout le trafic associé étant routé sur l'interface 2 ; le débit total $DT_{12}$ est diminué de 4 Gbps ; la charge $C_1$ sur l'interface 1 est alors de 89%, en dessous du seuil $c^{max}$ ;
- le débit $p_{222}$ associé au préfixe i=2 en entrée de l'interface j=2 qui était 3 Gbps dans la plage t = 2 est augmenté de 4 Gbps et devient 7 Gbps ; le débit total $DT_{22}$ en entrée du routeur RE2 est également augmenté de 4 Gbps et devient 92 Gbps.

On constate que la charge $C_2$ du routeur d'entrée RE2 de 92% dépasse le seuil de saturation $C^{max}$ de 90%.

On suppose maintenant que le chemin associé au préfixe i=2 est également rallongé sur le routeur d'entrée RE2 et que cet allongement de chemin a pour effet que le trafic associé au préfixe i=2 est déplacé sur l'interface la plus proche géographiquement de RE2, c'est à dire vers RE3.

Le tableau T5 en Annexe illustre ainsi les débits en entrée de chacun des routeurs d'entrée RE1, RE2, RE3 en supposant que le débit associé au préfixe i=2 est rallongé sur les routeurs RE1 et RE2 et routé sur le routeur d'entrée RE3. Notamment :

- le débit $p_{221}$ associé au préfixe i=2 en entrée de l'interface j=2 pour la plage de temps t=1 devient 0, tout le trafic associé étant routé sur l'interface 3 ; le débit total $DT_{21}$ est diminué de 5 Gbps ;
- le débit $p_{231}$ associé au préfixe i=2 en entrée de l'interface j=3 qui était de 5 Gbps dans la plage t = 1 est augmenté de 5 Gbps et devient 10 Gbps ; le débit total $DT_{31}$ est également augmenté de 5 Gbps ;

- le débit $p_{222}$ associé au préfixe i=2 en entrée de l'interface j=2 pour la plage de temps t=2 devient 0, tout le trafic associé étant routé sur l'interface 3 ; le débit total $DT_{22}$ est diminué de 7 Gbps ; la charge $C_2$ sur l'interface 2 est alors de 85%, en dessous du seuil $c^{max}$ ;
- le débit $p_{232}$ associé au préfixe i=2 en entrée de l'interface j=3 qui était de 5 Gbps dans la plage t = 2 est augmenté de 7 Gbps et devient 12 Gbps ; le débit total $DT_{32}$ en entrée du routeur RE2 est également augmenté de 7 Gbps et devient 77 Gbps ; la charge $C_3$ sur l'interface 2 est alors de 85%, en dessous du seuil $c^{max}$.

On constate que ce rééquilibrage de charge par allongement du chemin associé au préfixe i=2 sur les routeurs RE1 et RE2 conduit à une situation dans laquelle aucun des routeurs d'entrée RE1, RE2, RE3 n'est saturé.

De façon très avantageuse, le procédé de configuration selon l'invention permet de déterminer automatiquement un préfixe (étape E40) et les routeurs d'entrée du système autonome AS2 sur lesquels les chemins associés à ce préfixe doivent être rallongés (étape E50) pour que le trafic soit rééquilibré de façon à ce qu'aucun de ces routeurs d'entrée ne soit saturé.

Conformément à l'invention, cette détermination est effectuée en optimisant une fonction objectif FOBJ dans le respect d'un ensemble de contraintes.

Dans le mode de réalisation décrit ici, l'optimisation de la fonction objectif FOBJ consiste à minimiser le nombre de routeurs d'entrée (ou d'interfaces) à reconfigurer.

Dans le mode de réalisation décrit ici, la fonction d'optimisation respecte 5 contraintes :

- la première contrainte CST1 impose que le trafic associé à un préfixe i est routé sur un et un seul routeur d'entrée ;
- la deuxième contrainte CST2 interdit de déclencher le routage du trafic associé à , un préfixe i vers un routeur d'entrée REk tout en allongeant le chemin associé à ce préfixe sur ce routeur d'entrée ;
- la troisième contrainte CST3 impose que si le trafic associé à un préfixe i est basculé d'un routeur d'entrée REj vers un routeur d'entrée REk, alors le chemin associé à ce préfixe doit être allongé sur tous les routeurs d'entrée classés entre ces deux routeurs REj (inclus) et REk (exclus) dans la liste Lj ;
- la quatrième contrainte CST4 impose que, quelle que soit la plage de temps t, l'ensemble du trafic entrant sur un routeur d'entrée REj ne doit pas dépasser le seuil de saturation $C^{max}$ ; et
- la cinquième contrainte CST5 impose que si on allonge au moins un chemin associé à un préfixe sur un routeur d'entrée, alors ce routeur d'entrée doit être reconfiguré.

Dans un mode de réalisation de l'invention, cette optimisation est mise en œuvre par l'exécution d'un programme linéaire, la fonction objectif ainsi que les contraintes étant exprimées sous forme de fonctions linéaires par rapport à des variables de décision.

Dans un mode de réalisation, on introduit les notations suivantes :

$p_{ijt}$ : pic de trafic associé au préfixe i sur l'interface j au cours d'une plage de temps t.

Lj : liste ordonnée des routeurs d'entrée du premier système autonome du plus proche au plus éloigné du routeur saturé REj.

L(j,k) : sous-liste de Lj comprenant les routeurs d'entrée du premier système autonome qui sont géographiquement plus proches du routeur saturé REj que ledit routeur cible REk.

$x_{ijk}$ : variable de décision binaire égale à 1 si le trafic associé au préfixe i est rerouté de l'interface j à l'interface k, 0 sinon ;

$y_{ij}$ est une variable de décision binaire égale à 1 si le préfixe i a son chemin rallongé sur l'interface j, 0 sinon.

$z_j$ est une variable de décision binaire égale à 1 si l'interface j est reconfigurée, 0 sinon.

On introduit les notations suivantes :

$c^{max}$ est un seuil de saturation et $b_j$ est le débit maximal supporté par le routeur REj.

$x_{ijk}$ est une variable de décision binaire égale à 1 si le trafic associé au préfixe i est routé d'un routeur REi vers un routeur REj, 0 sinon ;

$y_{ij}$ est une variable de décision binaire égale à 1 si le chemin associé au préfixe i est rallongé sur un routeur d'entrée REj, 0 sinon ;

$z_j$ est une variable de décision binaire égale à 1 si le routeur d'entrée REi est reconfiguré, 0 sinon.

Avec ces notations :
- la fonction objectif FOBJ consistant à minimiser le nombre de routeurs d'entrée (ou d'interfaces) à reconfigurer s'exprime :

FOBJ :     $\text{Min} \sum_{j \in J} z_j$

- les 5 contraintes CST1 à CST5 s'expriment :

$$CST1 : \quad \sum_{k \in J} x_{ijk} = 1 \qquad \forall i \in I, \forall j \in J$$

$$CST2 : \quad x_{ijk} + y_{ik} \leq 1 \qquad \forall i \in I, \forall j \in J, \forall k \in J$$

$$CST3 : \quad X_{ijk} \leq y_{il} \qquad \forall i \in I, \forall j \in J, \forall k \in J, \forall l \in L(j,k)$$

$$CST4 : \quad \sum_{i \in I} \sum_{j \in J} p_{ijt} x_{ijk} \leq c^{max} b_k \qquad \forall k \in J, \forall t \in T$$

$$CST5 : \quad y_{ij} \leq z_j \qquad \forall i \in I, \forall j \in J$$

Dans un mode de réalisation de l'invention, l'optimisation de la fonction objection FOBJ sous le respect des contraintes CST1 à CST5 linéarisées telles que ci-dessus peut par exemple être mise en oeuvre par un solveur CPLEX version 12.56 édité par IBM (marque déposée), ou par un solveur CBC (pour Coin-or Branch and Cut en anglais) distribué à l'adresse https://www.coin-or.org/Cbc.

Le procédé d'optimisation fournit le préfixe i et les interfaces j (ou routeurs d'entrée REj) pour lesquels le chemin associé à ce préfixe i doit être rallongé.

Dans le mode de réalisation décrit ici, et comme mentionné précédemment, l'allongement d'un chemin associé à un préfixe i sur un routeur d'entrée REk (étape E50) comporte :

- une reconfiguration de ce routeur en ajoutant au moins un système autonome à un attribut AS-Path du protocole BGP ; et
- un envoi dudit attribut aux routeurs de sortie du système autonome amont.

Dans le mode de réalisation décrit ici, en référence à la figure 1, l'unité d'optimisation OPT a l'architecture matérielle d'un ordinateur. Elle comporte notamment un processeur 10, une mémoire vive 11, une mémoire morte 12 et des moyens de communication 13.

La mémoire morte 12 constitue un support d'enregistrement au sens de l'invention. Elle comporte un programme d'ordinateur PG conforme à l'invention.

Ce programme d'ordinateur PG comporte des instructions pour exécuter les étapes suivantes lorsque ledit programme est exécuté par un ordinateur.

- obtention, du dispositif de collecte DC, d'une information selon laquelle le trafic reçu par un routeur d'entrée d'un premier système autonome est saturé ;
- détermination d'un préfixe d'un sous-réseau de destination d'un système autonome en aval dudit premier système autonome ;
- envoi d'une instruction pour allonger le chemin associé audit préfixe sur au moins un routeur cible parmi les routeurs d'entrée dudit premier système autonome.

Cette instruction peut par exemple être envoyée au contrôleur CTR pour que celui-ci allonge le chemin associé au préfixe i sur un routeur d'entrée du système autonome.

Dans un mode de réalisation particulier, le programme d'ordinateur PG met en oeuvre le programme linéaire en nombre entier PLNE décrit précédemment pour déterminer le préfixe et les routeurs à reconfigurer.

ANNEXE

Tableau T1 :

| $p_{ijt}$ (Gbps) | | interface j = 1 | interface j = 2 | interface j = 3 |
|---|---|---|---|---|
| Plage de temps t = 1 | préfixe i = 1 | $p_{111}$ = 3 | $p_{121}$ =10 | $p_{131}$ =2 |
| | préfixe i = 2 | $p_{211}$ = 2 | $p_{221}$ =3 | $p_{231}$ =5 |
| | $DT_{j1}$ | $DT_{11}$ = 80 | $DT_{21}$ = 80 | $DT_{31}$ = 80 |
| Plage de temps t = 2 | préfixe i = 1 | $p_{112}$ = 6 | $p_{122}$ =20 | $p_{132}$ =2 |
| | préfixe i = 2 | $p_{212}$ = 4 | $p_{222}$ =3 | $p_{232}$ =5 |
| | $DT_{j2}$ | $DT_{12}$ = 93 | $DT_{22}$ = 88 | $DT_{32}$ = 70 |
| Charge Cj | | $C_1$ = 93% | $C_2$ = 88% | $C_3$ = 80% |

Tableau T2 :

| $p_{ijt}$ (Gbps) | | interface j = 1 | interface j = 2 | interface j = 3 |
|---|---|---|---|---|
| Plage de temps t = 1 | préfixe i = 1 | $p_{111}$ = 0 | $p_{121}$ =13 | $p_{131}$ =2 |
| | préfixe i = 2 | $p_{211}$ = 2 | $p_{221}$ =3 | $p_{231}$ =5 |
| | $DT_{j1}$ | $DT_{11}$ = 77 | $DT_{21}$ = 83 | $DT_{31}$ = 80 |

(suite)

| $p_{ijt}$ (Gbps) | | interface j = 1 | interface j = 2 | interface j = 3 |
|---|---|---|---|---|
| Plage de temps t = 2 | préfixe i = 1 | $p_{112} = 0$ | $p_{122} = 26$ | $p_{132} = 2$ |
| | préfixe i = 2 | $p_{212} = 4$ | $p_{222} = 3$ | $p_{232} = 5$ |
| | $DT_{j2}$ | $DT_{12} = 87$ | $DT_{22} = 94$ | $DT_{32} = 70$ |
| Charge Cj | | $C_1 = 87\%$ | $C_2 = 94\%$ | $C_3 = 80\%$ |

Tableau T3 :

| $p_{ijt}$ (Gbps) | | interface j = 1 | interface j = 2 | interface j = 3 |
|---|---|---|---|---|
| Plage de temps t = 1 | préfixe i = 1 | $p_{111} = 0$ | $p_{121} = 0$ | $p_{131} = 15$ |
| | préfixe i = 2 | $p_{211} = 2$ | $p_{221} = 3$ | $p_{231} = 5$ |
| | $DT_{j1}$ | $DT_{11} = 77$ | $DT_{21} = 70$ | $DT_{31} = 93$ |
| Plage de temps t = 2 | préfixe i = 1 | $p_{112} = 0$ | $p_{122} = 0$ | $p_{132} = 28$ |
| | préfixe i = 2 | $p_{212} = 4$ | $p_{222} = 3$ | $p_{232} = 5$ |
| | $DT_{j2}$ | $DT_{12} = 87$ | $DT_{22} = 68$ | $DT_{32} = 96$ |
| Charge Cj | | $C_1 = 87\%$ | $C_2 = 70\%$ | $C_3 = 80\%$ |

Tableau T4 :

| $p_{ijt}$ (Gbps) | | interface j = 1 | interface j = 2 | interface j = 3 |
|---|---|---|---|---|
| Plage de temps t = 1 | préfixe i = 1 | $p_{111} = 3$ | $p_{121} = 10$ | $p_{131} = 2$ |
| | préfixe i = 2 | $p_{211} = 0$ | $p_{221} = 5$ | $p_{231} = 5$ |
| | $DT_{j1}$ | $DT_{11} = 78$ | $DT_{21} = 82$ | $DT_{31} = 80$ |
| Plage de temps t = 2 | préfixe i = 1 | $p_{112} = 6$ | $p_{122} = 20$ | $p_{132} = 2$ |
| | préfixe i = 2 | $p_{212} = 0$ | $p_{222} = 7$ | $p_{232} = 5$ |
| | $DT_{j2}$ | $DT_{12} = 89$ | $DT_{22} = 92$ | $DT_{32} = 70$ |
| Charge Cj | | $C_1 = 89\%$ | $C_2 = 92\%$ | $C_3 = 80\%$ |

Tableau T5 :

| $p_{ijt}$ (Gbps) | | interface j = 1 | interface j = 2 | interface j = 3 |
|---|---|---|---|---|
| Plage de temps t = 1 | préfixe i = 1 | $p_{111} = 3$ | $p_{121} = 10$ | $p_{131} = 2$ |
| | préfixe i = 2 | $p_{211} = 0$ | $p_{221} = 0$ | $p_{231} = 10$ |
| | $DT_{j1}$ | $DT_{11} = 78$ | $DT_{21} = 77$ | $DT_{31} = 85$ |
| Plage de temps t = 2 | préfixe i = 1 | $p_{112} = 6$ | $p_{122} = 20$ | $p_{132} = 2$ |
| | préfixe i = 2 | $p_{212} = 0$ | $p_{222} = 0$ | $p_{232} = 12$ |
| | $DT_{j2}$ | $DT_{12} = 89$ | $DT_{22} = 85$ | $DT_{32} = 77$ |

(suite)

| p$_{ijt}$ (Gbps) | interface j = 1 | interface j = 2 | interface j = 3 |
|---|---|---|---|
| Charge Cj | C$_1$ = 89% | C$_2$ = 85% | C$_3$ = 85% |

Tableau TD :

| | PAR | LON | AMS |
|---|---|---|---|
| PAR | 0 | 345 km | 357 km |
| LON | 345 km | 0 | 355 km |
| AMS | 357 km | 355 km | 0 |

## Revendications

1. Procédé d'estimation d'au moins une dimension d'un objet représenté par un nuage de points relatif à une scène comprenant ledit objet, dans lequel ladite estimation tient compte d'une distance d'au moins un desdits points dudit nuage de points par rapport à un centre dudit nuage de points selon ladite au moins une direction.

2. Dispositif d'estimation d'au moins une dimension d'un objet représenté par un nuage de points relatif à une scène comprenant ledit objet, le dispositif comprenant un ou plusieurs processeurs configurés ensemble ou séparément pour

   - estimer une dimension dudit objet, en fonction d'une distance d'au moins un desdits points dudit nuage de points par rapport à un centre dudit nuage de points selon ladite au moins une direction.

3. Procédé selon la revendication 1 comprenant, ou dispositif selon la revendication 2, ledit un ou plusieurs processeurs étant configurés pour :

   - une obtention desdites distances, selon au moins une direction, desdits points dudit nuage de points par rapport à un centre dudit nuage de points selon ladite au moins une direction,
   - un ordonnancement desdits points en fonction desdites distances obtenues.

4. Procédé selon la revendication 3 comprenant, ou dispositif selon la revendication 3, ledit un ou plusieurs processeurs étant configurés pour

   - une détection d'une variation de distance supérieure à une première valeur entre deux points successifs desdits points ordonnés;

   ladite estimation tenant compte de la distance obtenue pour l'un desdits deux points successifs.

5. Procédé selon l'une des revendications 1, 3 à 4 comprenant, ou dispositif selon l'une des revendications 2 à 4, ledit un ou plusieurs processeurs étant configurés pour un ordonnancement des points selon un ordre croissant desdites distances obtenues et ladite estimation de ladite dimension dudit objet, selon ladite au moins une direction, tient compte de la distance obtenue la plus petite parmi les distances obtenues desdits deux points.

6. Procédé selon l'une des revendications 1, 3 à 4 comprenant, ou dispositif selon l'une des revendications 2 à 4, ledit un ou plusieurs processeurs étant configurés pour un ordonnancement des points selon un ordre décroissant desdites distances obtenues et ladite estimation de ladite dimension dudit objet, selon ladite au moins une direction, tient compte de la distance obtenue la plus grande parmi les distances obtenues desdits deux points.

7. Procédé selon l'une des revendications 1, 3 à 6 comprenant, ou dispositif selon l'une des revendications 2 à 6, ledit un ou plusieurs processeurs étant configurés pour l'obtention d'une coordonnée dudit centre du nuage de points selon une dimension comme étant la médiane des coordonnées des points du nuage de points selon ladite dimension.

**8.** Procédé selon l'une des revendications 3 à 6 comprenant, ou dispositif selon l'une des revendications 3 à 6, ledit un ou plusieurs processeurs étant configurés pour

- l'ordonnancement des points selon un ordre croissant desdites distances obtenues , la dimension estimée est le double de la distance, par rapport au centre du nuage, du point précédent, dans ledit ordonnancement, le premier point dont la distance est supérieure à une première valeur

**9.** Procédé selon l'une des revendications 3 à 6 comprenant, ou dispositif selon l'une des revendications 3 à 6, ledit un ou plusieurs processeurs étant configurés pour

- l'ordonnancement des points selon un ordre décroissant desdites distances obtenues,

la dimension estimée est le double de la distance, par rapport au centre du nuage, du point suivant, dans ledit ordonnancement, le premier point dont la distance est supérieure à une première valeur.

**10.** Procédé selon l'une des revendications 1, 3 à 9 comprenant, ou dispositif selon l'une des revendications 2 à 9, ledit un ou plusieurs processeurs étant configurés pour une normalisation desdites distances obtenues.

**11.** Procédé selon la revendication 10 ou dispositif selon la revendication 10, dans lesquels l'estimation comprend

- une représentation des distances normalisées des points dudit nuage de points, l'indice desdits points étant normalisé,
- une détermination d'une distance entre ladite représentation et la courbe y=x dans un espace de ladite représentation, et dans lequel la dimension estimée est le double de la distance entre ledit centre et le point pour lequel la distance entre la représentation et la courbe y=x est maximale.

**12.** Procédé selon l'une des revendications 1, 3 à 11 comprenant, ou dispositif selon l'une des revendications 2 à 11 ledit un ou plusieurs processeurs étant configurés pour

- une comparaison de la dimension estimée à une valeur fonction d'un bruit de mesure
- si ladite valeur estimée est inférieure à ladite valeur fonction dudit bruit de mesure alors la dimension estimée est égale à deux fois la distance entre le point le plus éloigné du centre et ledit centre.

**13.** Procédé selon l'une des revendications 1, 3 à 11 comprenant, ou dispositif selon l'une des revendications 2 à 11 ledit un ou plusieurs processeurs étant configurés pour une estimation de ladite dimension selon trois directions correspondant à la largeur, la profondeur et la hauteur dudit objet, les trois directions estimées définissant une boite englobant ledit objet.

**14.** Procédé selon la revendication 13 comprenant, ou dispositif selon la revendication 13 ledit un ou plusieurs processeurs étant configurés pour une

- une rotation selon au moins deux angles dudit nuage de points autour dudit centre, ladite dimension étant estimée pour les au moins deux angles
- une sélection de la dimension estimée donnant la boite englobante dont le volume est le plus petit, parmi lesdites dimensions estimées pour lesdits au moins deux angles.

**15.** Procédé selon la revendication 14 comprenant, ou dispositif selon la revendication 14 ledit un ou plusieurs processeurs étant configurés pour une obtention d'au moins deux angles de rotation en incrémentant les valeurs d'angle d'un pas constant.

**16.** Programme d'ordinateur comprenant des instructions pour l'exécution des étapes du procédé selon l'une des revendications 1, 3 à 15.

**17.** Support d'enregistrement lisible par un ordinateur sur lequel est enregistré un programme d'ordinateur comprenant des instructions pour l'exécution des étapes d'un procédé d'estimation d'au moins une dimension d'un objet représenté par un nuage de points relatif à une scène comprenant ledit objet, dans lequel ladite estimation tient compte d'une distance d'au moins un desdits points dudit nuage de points par rapport à un centre dudit nuage de points selon ladite au moins une direction.

[Fig. 1]

[Fig. 2]

Europäisches
Patentamt

European
Patent Office

Office européen
des brevets

# RAPPORT DE RECHERCHE EUROPEENNE

Numéro de la demande

EP 24 17 3494

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | GAO RUOMEI ET AL: "Interdomain Ingress Traffic Engineering Through Optimized AS-Path Prepending", NETWORKING 2005. NETWORKING TECHNOLOGIES, SERVICES, AND PROTOCOLS; PERFORMANCE OF COMPUTER AND COMMUNICATION NETWORKS; MOBILE AND WIRELESS COMMUNICATIONS SYSTEMS, vol. 3462 2 mai 2005 (2005-05-02), pages 647-658, XP047304686, Lecture Notes in Computer Science DOI: 10.1007/11422778_52 ISBN: 978-3-540-32017-3 Extrait de l'Internet: URL:https://link.springer.com/content/pdf/10.1007/11422778_52.pdf * Secs. 1-4; figure 1 * | 1-17 | INV. H04L45/02 H04L12/46 H04L45/12 H04L45/00 H04L45/80 H04L47/125 |
| | - - - - - | | |
| A | US 2020/007435 A1 (PAIDA RAJESH KUMAR [CA] ET AL) 2 janvier 2020 (2020-01-02) * alinéa [0045] - alinéa [0050]; figure 1 * * alinéa [0057] - alinéa [0069] * * alinéa [0074] - alinéa [0090] * * alinéa [0096] - alinéa [0102] * | 1-17 | **DOMAINES TECHNIQUES RECHERCHES (IPC)** H04L |
| | - - - - - | | |
| A | US 2022/321477 A1 (LAMBERT ANTHONY [FR] ET AL) 6 octobre 2022 (2022-10-06) * alinéa [0009] - alinéa [0010]; figure 1 * * alinéa [0015] - alinéa [0028] * * alinéa [0042] - alinéa [0051] * * alinéa [0077] - alinéa [0111] * * alinéa [0131] - alinéa [0132] * * alinéa [0143] - alinéa [0177] * | 1-17 | |
| | - - - - - | | |

Le présent rapport a été établi pour toutes les revendications

| Lieu de la recherche | Date d'achèvement de la recherche | Examinateur |
|---|---|---|
| La Haye | 17 juillet 2024 | Tortelli, Michele |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
   .............................................................
& : membre de la même famille, document correspondant

EPO FORM 1503 03.82 (P04C02)

EP 4 462 748 A1

**ANNEXE AU RAPPORT DE RECHERCHE EUROPEENNE
RELATIF A LA DEMANDE DE BREVET EUROPEEN NO.**

EP 24 17 3494

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-07-2024

| Document brevet cité au rapport de recherche | Date de publication | Membre(s) de la famille de brevet(s) | Date de publication |
|---|---|---|---|
| US 2020007435 A1 | 02-01-2020 | AUCUN | |
| US 2022321477 A1 | 06-10-2022 | EP 4075758 A1 | 19-10-2022 |
| | | FR 3121563 A1 | 07-10-2022 |
| | | US 2022321477 A1 | 06-10-2022 |